# EUROPÄISCHE PATENTSCHRIFT

(11) **EP 3 458 180 B1**
(45) Veröffentlichungstag und Bekanntmachung des Hinweises auf die Patenterteilung: **01.12.2021**
(21) Anmeldenummer: 17724534.7
(22) Anmeldetag: 16.05.2017
(51) Int. Cl.: B01D 53/26, B01D 5/00, E03B 3/28

(54) **VERFAHREN UND VORRICHTUNG ZUR GEWINNUNG VON WASSER AUS DER UMGEBUNGSLUFT**
METHOD AND DEVICE FOR OBTAINING WATER FROM AMBIENT AIR
PROCÉDÉ ET DISPOSITIF POUR OBTENIR DE L'EAU À PARTIR DE L'AIR AMBIANT

(30) Priorität: 17.05.2016 DE 102016006027; 29.07.2016 DE 102016009276
(43) Veröffentlichungstag der Anmeldung: 27.03.2019
(73) Patentinhaber: Aquahara Technology GmbH, 82205 Gilching (DE)
(72) Erfinder: VERPLANCKE, Philippe, 82205 Gilching (DE)
(74) Vertreter: Hofstetter, Schurack & Partner
(86) Internationale Anmeldenummer: PCT/EP2017/061725
(87) Internationale Veröffentlichungsnummer: WO 2017/198664

(56) Entgegenhaltungen:
- WO-A1-2005/072850
- DE-A1-102008 023 566
- DE-A1-102013 013 214

## Beschreibung

Die vorliegende Erfindung betrifft ein Verfahren zur Gewinnung von Wasser aus einer Umgebungsluft nach Anspruch 1, wobei das Verfahren zumindest folgende Verfahrensschritte umfasst: Inkontaktbringen der Umgebungsluft mit mindestens einem flüssigen Absorptionsmittel zur Absorption von zumindest einem Teil des in der Umgebungsluft enthaltenen Wassers; Fördern eines durch das absorbierte Wasser verdünnten Absorptionsmittels zu einem ersten Wärmetauscher und Überführen des verdünnten Absorptionsmittels in mindestens eine Desorptionsvorrichtung. Die Erfindung betrifft weiterhin eine Vorrichtung zur Gewinnung von Wasser aus einer Umgebungsluft nach Anspruch 9 umfassend mindestens eine Vorrichtung zum Aufbringen und/oder Leiten eines flüssigen Absorptionsmittels auf und/oder zu einer ersten Absorptionsstruktur, wobei die erste Absorptionsstruktur zur Absorption von zumindest einem Teil des in der Umgebungsluft enthaltenen Wassers ausgebildet ist; mindestens eine Fördervorrichtung zum Fördern eines durch das absorbierte Wasser verdünnten Absorptionsmittels zu einem ersten Wärmetauscher und mindestens eine Desorptionsvorrichtung.

Derartige Verfahren und Vorrichtungen zur Gewinnung von Wasser aus einer Umgebungsluft sind in einer großen Vielzahl bekannt. Insbesondere sind aus der Luftentfeuchtungstechnik entsprechende Absorptionsverfahren bekannt. Dabei wird Feuchtigkeit aus der Luft in sogenannten flüssigen Trockenmitteln, beispielsweise in konzentrierten, hygroskopischen Salzlösungen, absorbiert. Ein stark hygroskopisches Salz ist z.B. Lithiumchlorid. Anschließend wird durch Erwärmung, Vakuumdestillation, Umkehrosmose oder ähnliche Verfahren das Wasser zum Teil wieder aus der Salzlösung entfernt, so dass die Lösung wieder zur Entfeuchtung der Luft eingesetzt werden kann. Industriell wird dieses Verfahren beispielsweise durch die Firma Kathabar angeboten (siehe http://www.kathabar.com/liquid-desiccant/system-features-benefits). Weitere Systeme, die unter der Bezeichnung "Ducool" auf dem Markt angeboten werden (siehe http://icogen-sa.com/deshumidificadores-ener-g,-ducool-separador/ caracter%C3%ADsticas-de-la-serie-du-handling.html) leiten Prozessluft mittels eines Gebläses durch eine wabenartige Struktur, die mit der Salzlösung getränkt ist, so dass dort Wasserdampf aus der Luft von der kühlen und konzentrierten Salzlösung absorbiert wird. Ein separater Regenerationsluftstrom wird durch die mit der warmen Salzlösung getränkte Wabenstruktur geschickt. Dabei verdampft ein Teil des Wassers wieder aus der Salzlösung und der Wasserdampf wird von der Regenerationsluft abgeführt. Die oben dargestellten Verfahren können für den Aufbau eines atmosphärischen Wassergenerators genutzt werden, wobei das Ziel dieser Verfahren die Luftentfeuchtung und nicht die Gewinnung von flüssigem Wasser aus der Umgebungsluft ist. Aus der WO 2009/135618 A1 ist ein Verfahren und eine entsprechende Vorrichtung zur Gewinnung von Wasser aus der Umgebungsluft mit den Merkmalen der Oberbegriffe der jeweiligen unabhängigen Ansprüche bekannt.

Alle oben erwähnten Verfahren und Vorrichtungen weisen nachteiligerweise einen sehr hohen Energieeinsatz auf, insbesondere von elektrischer Energie. Würde man die bekannten atmosphärischen Wassergeneratoren ausschließlich mit regenerativer Energie versorgen, beispielsweise in Wüstenregionen, würde dies die Notwendigkeit einer sehr großen Fläche von photovoltaischen Modulen mit entsprechend hohen Kosten pro Liter des gewonnenen Wassers bedeuten. Bisher werden daher für den Betrieb der bekannten Anlagen mit Verdampfungsvorrichtungen Wärme aus folgenden Quellen eingesetzt: Verbrennung von fossilen Brennstoffen, mit den bekannten Nachteilen für die Umwelt; herkömmliche thermische Solarmodule, oft sogar mit Vakuumröhren, um entsprechend hohe Temperaturen erreichen zu können und mit entsprechend hohen Anlagekosten; sowie Kondensationswärme beim Verfahren der sogenannten Brüdenkompression, wofür wiederum viel elektrische Energie benötigt wird. Aus der DE 10 2013 013214 A ist eine Vorrichtung zur Gewinnung von Wasser aus atmosphärischer Luft mittels eines fließfähigen Sorbens zur Sorption des Wassers bekannt. Dabei wird entlang eines Sorptionsweges des Sorbens die Sorption mit dem fließfähigen Sorbens vorgesehen, wobei am Ende des Sorptionsweges ein mit aufgenommenem Wasser verdünntes Sorbens vorgesehen ist. Zudem ist eine Abtrenneinheit zum wenigstens teilweisen Abtrennen des aufgenommenen Wassers vom fließfähigen Sorbens beschrieben. Dabei weist die Abtrenneinheit wenigstens einen Verdampfer zum Verdampfen des aufgenommenen Wassers und wenigstens einen Unterdruck-Kompressor zum Beaufschlagen des verdünnten Sorbens mit Unterdruck auf. Die WO 2005/072850 A1 offenbart ein Verfahren zur Gewinnung von Wasser aus atmosphärischer Luft.

Die bei der Kondensation des Wassers im Anschluss an die Verdampfung/Destillation der Salzlösung anfallende Wärme muss in die Umgebung abgeführt werden. Dazu werden in herkömmlichen Anlagen Wärmetauscher, typischerweise Gas/Gas-Wärmetauscher, beispielsweise Plattenwärmetauscher (Kreuzstrom- oder Gegenstromwärmetauscher) oder auch Kühlvorrichtungen eingesetzt, die wiederum die Anlagenkosten erhöhen.

Es ist daher die Aufgabe der vorliegenden Erfindung ein gattungsgemäßes Verfahren und eine gattungsgemäße Vorrichtung bereitzustellen, welche einfacher und kostengünstiger zu betreiben beziehungsweise herzustellen sind und weniger Energieeinsatz als bekannte Verfahren und Vorrichtungen benötigen.

Zur Lösung dieser Aufgaben dient ein gattungsgemäßes Verfahren gemäß den Merkmalen des Anspruchs 1 sowie eine Vorrichtung gemäß den Merkmalen des Anspruchs 9. Vorteilhafte Ausgestaltungen mit zweckmäßigen Weiterbildungen der Erfindung sind in den jeweiligen abhängigen Ansprüchen angegeben, wobei vorteilhafte Ausgestaltungen des Verfahrens als vorteilhafte Ausgestaltungen der Vorrichtung und umgekehrt anzusehen sind.

Ein erfindungsgemäßes Verfahren zur Gewinnung von Wasser aus einer Umgebungsluft umfasst zumindest folgende Verfahrensschritte: Inkontaktbringen der Umgebungsluft mit mindestens einem flüssigen Absorptionsmittel zur Absorption von zumindest einem Teil des in der Umgebungsluft enthaltenen Wassers; Fördern eines durch das absorbierte Wasser verdünnten Absorptionsmittels zu einem ersten Wärmetauscher und Erwärmen des verdünnten Absorptionsmittels mittels des ersten Wärmetauschers; Überführen des verdünnten Absorptionsmittels in mindestens eine Desorptionsvorrichtung wobei in der Desorptionsvorrichtung desorptiertes Wasser zu dem ersten Wärmetauscher gefördert wird und mittels des ersten Wärmetauschers eine Kühlung des desorptierten Wassers mittels des verdünnten Absorptionsmittels erfolgt. Durch das erfindungsgemäße Verfahren ist zunächst eine Kühlung des desorptierten Wassers wie auch der Desorptionsvorrichtung über die Abfuhr des erwärmten desorptierten Wassers sowie gegebenfalls die Rückführung zumindest eines Teils des gekühlten desorptierten Wassers in die Desorptionsvorrichtung möglich beziehungsweise gewährleistet. Zudem erfolgt in dem ersten Wärmetauscher eine Erwärmung des verdünnten Absorptionsmittels vor der Überführung des verdünnten Absorptionsmittels in die Desorptionsvorrichtung. Vorteilhafterweise kann daher auf separate Kühlvorrichtungen verzichtet werden. Dadurch ist das Verfahren einfach und kostengünstig zu betreiben und benötigt einen geringeren Energieeinsatz als bekannte Verfahren. Unter dem Begriff "flüssiges Absorptionsmittel" wird dabei jegliche Art von flüssigen Trockenmitteln verstanden, die zu einer Absorption von zumindest einem Teil des in der Umgebungsluft enthaltenen Wassers in dem Absorptionsmittel führen. Bei den flüssigen Absorptionsmitteln kann es sich insbesondere um Salzlösungen, wie zum Beispiel eine Lithiumchloridlösung, handeln. Unter dem Begriff "Fördern" wird ein aktives Fördern beispielsweise mittels mindestens einer Pumpe aber auch ein Fördern mittels Schwerkraft verstanden.

In weiteren vorteilhaften Ausgestaltungen des erfindungsgemäßen Verfahrens erfolgt das Inkontaktbringen der Umgebungsluft mit dem flüssigen Absorptionsmittel durch ein Versprühen des Absorptionsmittels in der Umgebungsluft oder mittels eines Hindurchleitens der Umgebungsluft durch eine mit dem Absorptionsmittel getränkte Absorptionsstruktur. Dadurch ist gewährleistet, dass die Umgebungsluft großflächig mit dem flüssigen Absorptionsmittel in Kontakt gebracht wird. Für den Fall der Verwendung von einer mit dem Absorptionsmittel getränkten Absorptionsstruktur werden Wabenstrukturen oder auch andere großflächige Strukturen verwendet, über welche das Absorptionsmittel fließen kann und die von der Umgebungsluft durch- und/oder umströmt werden. Auch andere Strukturen sind denkbar, wobei darauf zu achten ist, dass die Umgebungsluft immer großflächig mit dem flüssigen Absorptionsmittel in Kontakt gebracht wird. Durch die genannten Verfahrensschritte ist eine möglichst große Absorption des in der Umgebungsluft enthaltenen Wassers gewährleistet.

In weiteren vorteilhaften Ausgestaltungen des erfindungsgemäßen Verfahrens erfolgt ein zusätzliches Erwärmen des durch das absorbierte Wasser verdünnten Absorptionsmittels mittels mindestens einer Erwärmungsvorrichtung, wobei die Erwärmungsvorrichtung(en) vor und/oder nach und/oder außerhalb und/oder innerhalb der Desorptionsvorrichtung angeordnet ist/sind. Die Erwärmung des verdünnten Absorptionsmittels erhöht den Wirkungsgrad der Desorption des absorbierten Wassers innerhalb der Desorptionsvorrichtung. Dadurch können die aus der Umgebungsluft gewonnenen Wassermengen signifikant erhöht werden. Die Erwärmungsvorrichtungen können dabei in Fließrichtung des verdünnten Absorptionsmittels vor und damit außerhalb der Desorptionsvorrichtung und/oder auch innerhalb der Desorptionsvorrichtung angeordnet sein. Dabei besteht die Möglichkeit, dass die Erwärmungsvorrichtung mindestens einen zwischen dem ersten Wärmetauscher und der Desorptionsvorrichtung angeordneten zweiten Wärmetauscher umfasst. Dieser zweite Wärmetauscher ist einerseits mit einer Wärmequelle und andererseits mit den das verdünnte Absorptionsmittel leitenden Leitungen beziehungsweise Schläuchen verbunden. Insbesondere kann der zweite Wärmetauscher in Wirkverbindung mit mindestens einem Solarmodul und/oder mindestens einem Schlauchsystem mit einer Wärmeträgerflüssigkeit stehen. Als Erwärmungsvorrichtungen können bei dem erfindungsgemäßen Verfahrens insbesondere die genannten Wärmetauscher, Solarmodule und/oder Leitungssysteme für Wärmeträgerflüssigkeiten verwendet werden. Die Verwendung der genannten Erwärmungsvorrichtungen gewährleistet durch die Verwendung insbesondere regenerativer Energien einen insgesamt geringen Energieeinsatz und damit ein kostengünstiges Verfahren. Auch die Möglichkeit der Anordnung von mindestens einer Erwärmungsvorrichtung in der Desorptionsvorrichtung führt zu einem deutlich erhöhten Ertrag an Wasser.

Erfindungsgemäß wird das erwärmte und verdünnte Absorptionsmittel in der Desorptionsvorrichtung mindestens einer Verdampfungsstruktur zugeführt, wobei an und/oder in der Verdampfungsstruktur eine Verdampfung von zumindest einem Teil des in dem erwärmten, verdünnten Absorptionsmittel enthaltenen Wassers erfolgt. Die Verdampfungsstruktur ist wiederum derart ausgebildet, dass es zu einer großflächigen Verdampfung des in dem erwärmten, verdünnten Absorptionsmittel enthaltenen Wassers kommt. Beispielsweise können auch für die Verdampfungsstruktur Wabenstrukturen verwendet werden. Da die Verdampfungsstruktur mit einer großen Oberfläche ausgebildet ist, kann die Verdampfung des in dem verdünnten und erwärmten Absorptionsmittel enthaltenen Wassers bei relativ niedrigen Temperaturen erfolgen. Die bereits beschriebene Erwärmung des in der ersten Absorptionsstruktur absorbierten Wassers der Umgebungsluft kann daher mittels relativ kostengünstiger thermischer Solarmodule oder der anderen im Vorhergehenden beschriebenen Erwärmungsvorrichtungen erfolgen. Auf teure Hochtemperatur-Solarmodule oder andere kostenintensive Anordnungen zur Verbesserung der Verdampfungsrate an der Verdampfungsstruktur kann vorteilhafterweise verzichtet werden. Des Weiteren wird das mittels der Verdampfungsstruktur verdampfte Wasser mindestens einer ebenfalls in der Desorptionsvorrichtung angeordneten und mit Wasser getränkten Kondensationsstruktur zur Kondensation des Wasserdampfs und zur Gewinnung von desorptierten Wasser zugeführt. Die Zuführung des verdampften Wassers zu der Kondensationsstruktur kann mittels einer natürlichen und/oder technisch erzeugten Luftströmung erfolgen. Es besteht aber auch die Möglichkeit, dass die Zuführung des verdampften Wassers zu der Kondensationsstruktur mittels natürlicher Diffusion erfolgt. Des Weiteren besteht die Möglichkeit, dass innerhalb der Desorptionsvorrichtung ein Unterdruck zur Unterstützung der Zuführung des verdampften Wassers zu der Kondensationsstruktur angelegt wird. Durch diese Maßnahmen ist gewährleistet, dass das an der Verdampfungsstruktur verdampfte Wasser ohne weiteres und insbesondere ohne großen Energieaufwand der Kondensationsstruktur zugeführt wird. Bei einer natürlich erzeugten Luftströmung wird keine zusätzliche Energie benötigt. Aber auch bei einer technisch erzeugten Luftströmung, wie sie beispielsweise durch ein Gebläse erzeugt werden kann, ist der zusätzliche Energieaufwand gering. Entsprechendes gilt für das Anlegen eines Unterdrucks innerhalb der Desorptionsvorrichtung. Durch diese Maßnahmen ist erfindungsgemäß gewährleistet, dass zumindest ein Großteil des verdampften Wassers an der Kondensationsstruktur kondensiert und als flüssiges Wasser aus der Desorptionsvorrichtung abgeführt werden kann. Die Kondensationsstruktur weist wiederum eine möglichst große Oberfläche auf, wie dies zum Beispiel durch eine Wabenstruktur erfüllt wird. Aber auch andere Strukturen sind denkbar.

In weiteren vorteilhaften Ausgestaltungen des erfindungsgemäßen Verfahrens wird die Kondensationsstruktur zumindest teilweise mit durch den ersten Wärmetauscher gekühltes, desorptiertes Wasser getränkt. Dies erhöht die Kondensationsrate des Wasserdampfs an der Kondensationsstruktur. Des Weiteren besteht die Möglichkeit, dass an der Verdampfungsstruktur eine Konzentration des verdünnten Absorptionsmittels unter Erhalt eines konzentrierten Absorptionsmittels erfolgt, wobei das konzentrierte Absorptionsmittel der Absorptionsstruktur mit oder ohne Zwischenschaltung eines dritten Wärmetauschers zugeführt wird. Wird der dritte Wärmetauscher in Fließrichtung des verdünnten Absorptionsmittels nach dem ersten Wärmetauscher angeordnet und verwendet, so erfolgt durch diesen eine zusätzliche Erwärmung des verdünnten Absorptionsmittels vor Eintritt in die Desorptionsvorrichtung. Durch die Verwendung dieser bereits vorhandenen Wärmequelle wird wiederum die Notwendigkeit nach externen Wärmequellen vermieden oder zumindest verringert, sodass das Verfahren äußerst kostengünstig und energieeffizient betrieben werden kann.

In einer weiteren vorteilhaften Ausgestaltung des erfindungsgemäßen Verfahrens wird zumindest ein Teil des desorptierten Wassers in Fließrichtung vor und/oder nach dem ersten Wärmetauscher über mindestens eine geeignete Vorrichtung aus dem Systemkreislauf entnommen. Dadurch wird einerseits vermieden, dass durch die kontinuierliche Kondensation von Wasser in der Desorptionsvorrichtung die Wassermenge im System stetig zunimmt. Damit der Wasserkreislauf nicht überläuft, wird zumindest ein Teil dieses desorptierten Wasser kontinuierlich oder zu vorbestimmten Zeitpunkten entnommen.

Die vorliegende Erfindung betrifft weiterhin eine Vorrichtung zur Gewinnung von Wasser aus einer Umgebungsluft, wobei die Vorrichtung mindestens eine Vorrichtung zum Aufbringen und/oder Leiten eines flüssigen Absorptionsmittels auf und/oder zu einer Absorptionsstruktur umfasst, wobei die Absorptionsstruktur zur Absorption von zumindest einem Teil des in der Umgebungsluft enthaltenen Wassers ausgebildet ist. Die Vorrichtung umfasst zudem mindestens eine Fördervorrichtung zum Fördern eines durch das absorbierte Wasser verdünnten Absorptionsmittels zu einem ersten Wärmetauscher und mindestens eine Desorptionsvorrichtung. Erfindungsgemäß ist der erste Wärmetauscher mit der Desorptionsvorrichtung flüssigkeitsleitend verbunden, derart, dass in der Desorptionsvorrichtung desorptiertes Wasser mittels des verdünnten Absorptionsmittels gekühlt wird. Durch die erfindungsgemäße Ausgestaltung der Vorrichtung erfolgt eine kostengünstige Kühlung des in der Desorptionsvorrichtung desorptierten Wassers und damit der Desorptionsvorrichtung an sich. Auf zusätzliche Kühlvorrichtungen beispielsweise an oder in der Desorptionsvorrichtung kann erfindungsgemäß verzichtet werden. Damit kann die erfindungsgemäße Vorrichtung einerseits kostengünstig und einfach hergestellt werden und zudem wird ein geringerer Energieeinsatz benötigt. Wie bereits dargelegt, wird der Begriff "flüssiges Absorptionsmittel" für alle Arten von flüssigen Trockenmitteln, die zur Absorption von zumindest einem Teil des in der Umgebungsluft enthaltenen Wassers dienen können, verwendet. Dabei kann das flüssige Absorptionsmittel beispielsweise eine hygroskopische Salzlösung sein. Unter dem Begriff "Fördern" wird ein aktives Fördern beispielsweise mittels mindestens einer Pumpe aber auch ein Fördern mittels Schwerkraft verstanden. Zudem erfolgt durch den ersten Wärmetauscher eine erste Erwärmung des verdünnten Absorptionsmittels.

In weiteren vorteilhaften Ausgestaltungen der erfindungsgemäßen Vorrichtung umfasst die Vorrichtung mindestens eine weitere Erwärmungsvorrichtung für ein Erwärmen des verdünnten Absorptionsmittels, wobei die Erwärmungsvorrichtung(en) vor und/oder nach und/oder außerhalb und/oder innerhalb der Desorptionsvorrichtung angeordnet ist/sind. Durch die zusätzliche Erwärmung des verdünnten Absorptionsmittels, welches bereits vorteilhafterweise durch den ersten Wärmetauscher erwärmt wird, wird die Desorption des Wassers innerhalb des verdünnten Absorptionsmittels erleichtert und beschleunigt. Dadurch ergibt sich erfindungsgemäß eine deutliche Erhöhung der Anteile an aus der Umgebungsluft gewonnenen Wassers. Dabei können die Erwärmungsvorrichtungen insbesondere Wärmetauscher, Solarmodule und/oder Leitungssysteme für Wärmeträgerflüssigkeiten umfassen. Diese Arten von Erwärmungsvorrichtungen können insbesondere energieeffizient betrieben werden. Beispielsweise besteht die Möglichkeit, dass die Erwärmungsvorrichtung mindestens einen zwischen dem ersten Wärmetauscher und der Desorptionsvorrichtung angeordneten zweiten Wärmetauscher umfasst, wobei der zweite Wärmetauscher einerseits flüssigkeitsleitend mit dem ersten Wärmetauscher und andererseits flüssigkeitsleitend mit der Desorptionsvorrichtung verbunden ist. Dabei kann der zweite Wärmetauscher insbesondere mit mindestens einer Heizvorrichtung, wie zum Beispiel mindestens einem Solarmodul und/oder mindestens einem Schlauchsystem mit einer Wärmeträgerflüssigkeit, in Wirkverbindung stehen.

Bei der erfindungsgemäßen Vorrichtung ist in der Desorptionsvorrichtung mindestens eine Verdampfungsstruktur ausgebildet, wobei an und/oder in der Verdampfungsstruktur zumindest ein Teil des Wassers eines der Desorptionsvorrichtung zugeführten, erwärmten und verdünnten Absorptionsmittels verdampft. Durch die Verdampfungsstruktur ist eine zuverlässige Desorption des in dem erwärmten und verdünnten Absorptionsmittel gebundenen Wassers gewährleistet. Zudem ist in der Desorptionsvorrichtung mindestens eine mit Wasser getränkte Kondensationsstruktur zur Kondensation des mittels der Verdampfungsstruktur verdampften Wassers und zur Gewinnung von desorptierten Wasser ausgebildet. Dabei kann die Desorptionsvorrichtung zudem Mittel zum Transport des mittels der Verdampfungsstruktur verdampften Wassers zu der Kondensationsstruktur umfassen. Derartige Mittels zum Transport können beispielsweise durch ein Gebläse innerhalb der Desorptionsvorrichtung realisiert werden. Es besteht aber auch die Möglichkeit, dass die Vorrichtung Mittel zum Erzeugen eines Unterdrucks in der Desorptionsvorrichtung umfasst. Durch die genannten Ausgestaltungsmöglichkeiten der Desorptionsvorrichtung wird einerseits eine Desorption des in dem erwähnten und verdünnten Absorptionsmittel gebundenen Wassers über ein Verdampfen und zudem die Kondensation des so erhaltenen Wasserdampfs an der Kondensationsstruktur gewährleistet. Dadurch ist eine zuverlässige Gewinnung von Wasser aus der Umgebungsluft gewährleistet. Auch durch die Anordnung von mindestens einer Erwärmungsvorrichtung innerhalb der Desorptionsvorrichtung zur weiteren Erwärmung des zugeführten, erwärmten und verdünnten Absorptionsmittels wird dessen Desorption und damit eine Verdampfungsrate des gebundenen Wassers an der Verdampfungsstruktur signifikant erhöht. Die Mittel zum Transport des Wasserdampfs von der Verdampfungsstruktur zu der Kondensationsstruktur aber auch die Mittel zum Erzeugen eines Unterdrucks in der Desorptionsvorrichtung beschleunigen die Zuführung des Wasserdampfs zu der Kondensationsstruktur. Sowohl die Verdampfungsstruktur wie auch die Kondensationsstruktur sind dabei derart ausgebildet, dass sie eine große Oberfläche ausbilden. Insbesondere können hierbei Wabenstrukturen verwendet werden. Aber auch andere Strukturen sind denkbar. Die Ausbildung von großen Oberflächen erhöht die Ausbeute an Wasserdampf beziehungsweise Wasser sowohl an der Verdampfungsstruktur wie auch der Kondensationsstruktur. Zudem ist gewährleistet, dass die genannten Vorgänge bei relativ niedrigen Temperaturen effizient durchgeführt werden können.

In einer weiteren vorteilhaften Ausgestaltung der erfindungsgemäßen Vorrichtung umfasst diese mindestens ein Leitungssystem, wobei das Leitungssystem derart ausgebildet ist, dass die Kondensationsstruktur zumindest teilweise mit durch den ersten Wärmetauscher gekühltem, desorptiertem Wasser getränkt wird. Durch die zumindest teilweise Rückführung des desorptierten Wassers aus der Umgebungsluft kann auf zusätzliche Wasserquellen verzichtet werden. Damit ist eine kosteneffiziente Gewinnung des Wassers aus der Umgebungsluft gewährleistet.

In weiteren vorteilhaften Ausgestaltungen der erfindungsgemäßen Vorrichtung weist diese mindestens ein Leitungssystem auf, wobei dieses Leitungssystem derart ausgebildet ist, dass aus der Desorptionsvorrichtung abfließendes konzentriertes Absorptionsmittel der ersten Absorptionsstruktur mit oder ohne Zwischenschaltung eines dritten Wärmetauschers zugeführt wird. Durch das genannte Leitungssystem kann vorteilhafterweise auch der Fließkreislauf des Absorptionsmittels geschlossen werden, sodass dieses vielfach wiederverwendet werden kann. Dadurch ergeben sich deutliche Kosteneinsparungen. Für den Fall, dass der dritte Wärmetauscher zwischengeschaltet ist, ist dieser in Fließrichtung des verdünnten Absorptionsmittels nach dem ersten Wärmetauscher angeordnet, wobei durch den dritten Wärmetauscher eine weitere Erwärmung des verdünnten Absorptionsmittels vor Eintritt in die Desorptionsvorrichtung erfolgt. Damit kann die Wärme des aus der Desorptionsvorrichtung abfließenden konzentrierten Absorptionsmittels für eine zusätzliche Erwärmung des verdünnten Absorptionsmittels verwendet werden. Die Vorrichtung kann somit äußerst energieeffizient betrieben werden.

In einer weiteren vorteilhaften Ausgestaltung der erfindungsgemäßen Vorrichtung umfasst die Vorrichtung mindestens eine Vorrichtung zur Entnahme des desorptierten Wassers aus dem Systemkreislauf. Dabei kann diese Entnahmevorrichtung vor und/oder nach dem ersten Wärmetauscher angeordnet sein. Durch die zumindest teilweise Entnahme des desorptierten Wassers ist einerseits gewährleistet, dass der Wasserkreislauf in der Vorrichtung nicht überläuft, andererseits kann das entnommene Wasser für andere Zwecke verwendet werden. Die Entnahme des desorptierten Wassers kann dabei kontinuierlich oder zu vorgegebenen Zeitpunkten erfolgen.

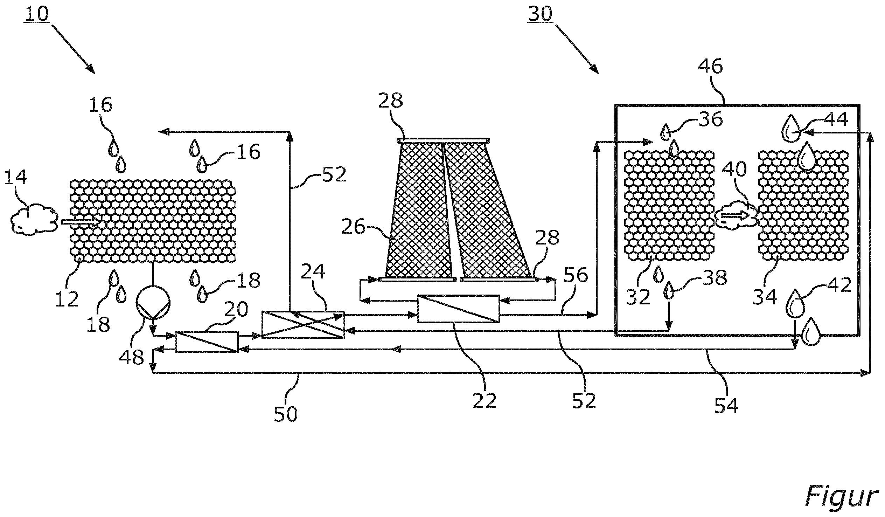

Weitere Merkmale der Erfindung ergeben sich aus den Ansprüchen, dem Ausführungsbeispiel sowie anhand der Zeichnung. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen.

Dabei zeigt die Figur eine schematische Darstellung einer erfindungsgemäßen Vorrichtung.

Die Vorrichtung 10 zur Gewinnung von Wasser aus einer Umgebungsluft 14 umfasst in dem dargestellten Ausführungsbeispiel eine Vorrichtung (nicht dargestellt) zum Ausbringen eines flüssigen Absorptionsmittels 16 auf eine Absorptionsstruktur 12. Zum Aufbringen beziehungsweise Auftragen des flüssigen Absorptionsmittels 16 kann ein geeignetes Rohrsystem mit entsprechenden Öffnungen oder Ventilen oder vergleichbare Sprühvorrichtungen verwendet werden. Das flüssige Absorptionsmittel 16 wird dabei insbesondere über eine gesamte obere Fläche der Absorptionsstruktur 12 verteilt und tränkt so die Absorptionsstruktur 12. Das Absorptionsmittel 16 fließt anschließend langsam in die unteren Bereiche der Absorptionsstruktur 12, wo es aus dieser wieder herausfließt und durch ein geeignetes Wannensystem (nicht dargestellt) wieder aufgefangen wird. Man erkennt, dass in dem dargestellten Ausführungsbeispiel die Absorptionsstruktur 12 wabenförmig ausgebildet ist. Dadurch ergibt sich eine sehr große Oberfläche an der eine Absorption von zumindest einem Teil des in der Umgebungsluft 14 enthaltenen Wassers erfolgen kann. Die Absorption des Wassers aus der Umgebungsluft 14 erfolgt dabei in dem flüssigen Absorptionsmittel 16, wobei die dadurch entstehende Kondensationswärme durch die große Oberfläche der wabenförmigen Absorptionsstruktur 12 von dem Absorptionsmittel 16 sofort wieder an die Umgebungsluft 14 abgegeben wird. Durch die Absorption von Wasser aus der Umgebungsluft 14 wird das flüssige Absorptionsmittel 16 verdünnt und tritt als verdünntes Absorptionsmittel 18 aus der Absorptionsstruktur 12 aus.

In dem dargestellten Ausführungsbeispiel wird die Umgebungsluft 14 großflächig mit dem flüssigen Absorptionsmittel 16 in Kontakt gebracht. Bei dem flüssigen Absorptionsmittel 16 handelt es sich beispielsweise um eine konzentrierte Lithiumchlorid-Lösung. Die Absorptionsstruktur 12 kann dabei derart ausgebildet sein, dass sie im Freien aufstellbar ist und von natürlichem Wind durchströmt werden kann. Damit lassen sich Energie- und Anlagekosten sparen, da keine zusätzlichen Gebläse benötigt werden. Sollten die natürlichen Windverhältnisse allerdings keinen genügend großen Durchfluss der Umgebungsluft 14 durch die Absorptionsstruktur 12 erlauben, können natürlich entsprechende Hilfsmittel, wie zum Beispiel Gebläse zusätzlich eingesetzt werden. Die Absorptionsstruktur 12 ist mit geeigneter Durchlässigkeit, geeigneter Stärke und geeigneter Größe zu wählen. Solche Strukturen stehen beispielsweise in einer robusten und gegen Zersetzung geschützten Karton-Ausführung sehr kostengünstig zur Verfügung und werden heutzutage beispielsweise bei der Verdunstungskühlung von Hühnerställen verwendet.

In der weiteren Beschreibung des Ausführungsbeispiels stellen die mit Pfeilen versehenen geraden Linien Flüssigkeitsleitungen, wie zum Beispiel Rohre oder Schläuche dar, worin die in der Vorrichtung verwendeten Flüssigkeiten in Pfeilrichtung fließen. Die dazu notwendigen Pumpvorrichtungen sind dem Fachmann bekannt und in der Figur nur in einer Ausführungsvariante dargestellt.

Es handelt sich dabei um die Fördervorrichtung beziehungsweise Pumpe 48 zum Fördern des durch das absorbierte Wasser verdünnten Absorptionsmittels 18 zu einem ersten Wärmetauscher 20. Man erkennt, dass der erste Wärmetauscher 20 mit einer Desorptionsvorrichtung 30 über ein Leitungssystem 54 flüssigkeitsleitend verbunden ist, derart, dass in der Desorptionsvorrichtung 30 desorptiertes Wasser 42 mittels des verdünnten Absorptionsmittels 18 gekühlt wird. Zudem erfolgt eine erste Erwärmung des verdünnten Absorptionsmittels 18 über den ersten Wärmetauscher 20, da das aus der Desorptionsvorrichtung 30 kommende desorptierte Wasser 42 eine höhere Temperatur aufweist als das verdünnte Absorptionsmittel 18.

In dem dargestellten Ausführungsbeispiel wird das verdünnte Absorptionsmittel 18 nach dem ersten Wärmetauscher 20 einem weiteren Wärmetauscher 24 zugeführt. Der Wärmetauscher 24 dient zur Wärmerückgewinnung der Wärme eines konzentrierten Absorptionsmittels 38, welches über ein Leitungssystem 52 aus der Desorptionsvorrichtung 30 an den Wärmetauscher 24 rückgeführt beziehungsweise zugeführt wird. Das konzentrierte Absorptionsmittel 38 weist dabei eine höhere Temperatur auf als das aus dem ersten Wärmetauscher 20 kommende verdünnte Absorptionsmittel 18. Das aus der Desorptionsvorrichtung 30 abfließende konzentrierte Absorptionsmittel 38 wird dann in Fließrichtung nach dem Wärmetauscher 24 wiederum dem oberen Bereich der Absorptionsstruktur 12 zugeführt. Dies erfolgt wiederum über das Leitungssystem 52.

Im weiteren Verlauf wird das verdünnte Absorptionsmittel 18 einem zweiten Wärmetauscher 22 zugeführt, wo es durch eine Wärmeträgerflüssigkeit einer Erwärmungsvorrichtung, nämlich einem Solarmodul 26 und einem entsprechenden Schlauchsystem 28 des Solarmoduls 26, erwärmt wird. Das nunmehr so erwärmte flüssige Absorptionsmittel 36 wird dann - ausgehend von dem zweiten Wärmetauscher 22 - über ein Leitungssystem 56 in ein Gehäuse 46 der Desorptionsvorrichtung 30 überführt. Man erkennt, dass das erwärmte, verdünnte Absorptionsmittel 36 einer Verdampfungsstruktur 32, welche innerhalb der Desorptionsvorrichtung 30 ausgebildet ist, zugeführt wird und diese tränkt. Die Verdampfungsstruktur 32 ist wiederum wabenartig ausgebildet. An der Verdampfungsstruktur 32 verdampft ein Teil des erwärmten, verdünnten Absorptionsmittels 36 unter Bildung von Wasserdampf. Der Wasserdampf, der durch das erwärmte, verdünnte Absorptionsmittel 36 abgegeben wird, wird von einer Regenerationsluftströmung 40 mitgeführt und anschließend innerhalb des Gehäuses 46 mit einer Kondensationsstruktur 34, die mit Wasser getränkt ist, in Kontakt gebracht. Die Kondensationsstruktur 34 dient zur Kondensation des mit Hilfe der Verdampfungsstruktur 32 verdampften Wassers. Man erkennt, dass auch die Kondensationsstruktur 34 wabenförmig ausgebildet ist, um eine möglichst große Oberfläche auszubilden. In einer vorteilhaften Ausgestaltung der Desorptionsvorrichtung 30 sind die Verdampfungsstruktur 32 und die Kondensationsstruktur 34 räumlich sehr nah aneinander, zum Beispiel parallel zueinander, angeordnet, wodurch der Transport des Wasserdampfs über die Regenerationsluftströmung 40 von der Verdampfungsstruktur 32 zu der Kondensationsstruktur 34 zum Beispiel durch natürliche Diffusion und/oder natürliche Konvektion stattfinden kann. So kann gegebenenfalls auf ein zusätzliches Gebläse verzichtet werden, was Ersparnisse beim Elektrizitätsverbrauch und bei den Anlagekosten zur Folge hat. Die Regenerationsluft 40 bleibt stets vollständig innerhalb des Gehäuses 46. Die Temperatur der erwärmten, verdünnten Salzlösung 36 ist dabei so zu wählen, dass der Partialdruck des Wasserdampfs in der Regenerationsluft 40 den Sättigungsdruck bei Umgebungstemperatur übersteigt.

Da das Wasser, mit dem die Kondensationsstruktur 34 getränkt ist, eine Temperatur geringfügig oberhalb der Umgebungstemperatur und somit eine deutlich geringere Temperatur als die erwärmte, verdünnte Salzlösung 36 aufweist, kondensiert der Wasserdampf aus der Regenerationsluft 40 innerhalb der Kondensationsstruktur 34 und dient somit zur Gewinnung von Wasser aus der Umgebungsluft 14. Man erkennt, dass die bei der Kondensation des Wasserdampfs wieder frei werdende Wärme über das desorptierte Wasser 42 aus der Kondensationsstruktur 34 herausgetragen und mittels des ersten Wärmetauschers 20 an das verdünnte Absorptionsmittel 18 abgegeben wird. Dadurch kann auf einen großen und teuren Luft-Luftwärmetauscher verzichtet werden. Ebenfalls kann auf zusätzliche Kühlvorrichtungen oder beispielsweise Gebläse zur Kühlung verzichtet werden, was wiederum Ersparnisse beim Elektrizitätsverbrauch und bei den Anlagekosten zur Folge hat.

Des Weiteren erkennt man, dass das durch die teilweise Verdampfung des Wassers an der Verdampfungsstruktur 32 wieder konzentrierte Absorptionsmittel 38 über das Leitungssystem 52 aus dem Gehäuse 46 der Desoptionsvorrichtung 30 herausgeführt wird und über den dritten Wärmetauscher 24 wieder an die Absorptionsstruktur 12 abgegeben wird. Der Prozesskreislauf kann somit ohne weiteres wiederholt werden.

Des Weiteren wird aus der Figur deutlich, dass gemäß dem dargestellten Ausführungsbeispiel zumindest ein Teil des desorptierten Wassers 42 über ein Leitungssystem 50 wieder an einen oberen Bereich der Kondensationsstruktur 34 in der Desorptionsvorrichtung 30 abgegeben wird. Da das desorptierte Wasser 42 durch den ersten Wärmetauscher 20 gekühlt worden ist, wird dieses gekühlte desorptierte Wasser mit 44 bezeichnet.

Bei der obigen Beschreibung des Ausführungsbeispiels wird es einfachheitshalber so dargestellt, dass der komplette Massestrom des Absorptionsmittels 16, 18, 36, 38 bzw. des Wassers durch den kompletten Kreislauf fließt. Das System kann so betrieben werden und wird das dargestellte Ergebnis erzielen. Einem Fachmann ist jedoch klar, dass möglicherweise zur Optimierung der Wärmeströme und in Abhängigkeit von Absorptionsraten und Verdampfungsraten nicht der komplette Massestrom sondern nur ein Teil des Absorptionsmittels 16, 18, 36, 38 bzw. des Wassers durch den kompletten Kreislauf fließen muss. Ein anderer Teil des Absorptionsmittels 16, 18 kann mittels einer separaten Pumpe beispielsweise vom unteren zum oberen Bereich der Absorptionsstruktur 12 befördert werden. Ebenso kann ein Teil des erwärmten, verdünnten Absorptionsmittels 36 von einem unteren zu einem oberen Bereich der Verdampfungsstruktur 32 befördert werden und dabei eventuell zum Teil den zweiten Wärmetauscher 22 zur Aufnahme weiterer Wärme durchfließen. Und ein Teil des desoptierten Wassers 42 kann von einem unteren zu einem oberen Bereich der Kondensationsstruktur 34 befördert werden. Alle oben genannten Masseströme bzw. Teilströme können ebenfalls zumindest teilweise an dem zweiten und/oder dritten Wärmetauscher 22, 24 vorbei statt durch diese hindurch geführt werden. Auch können die Volumenströme des kalten bzw. des warmen Absorptionsmittels (z.B. durch geeignete Pumpleistungen) und die Volumenströme der Luftströme (z.B. durch eine geeignete Durchlässigkeit der Wabenstrukturen) angepasst werden. Die vorliegende Erfindung inkludiert explizit solche möglichen Kombinationen und Varianten zur Optimierung des Gesamtsystems im Hinblick auf die Ausbeute an Wasser und/oder auf den Energieverbrauch und/oder auf die Anlagenkosten.

Um aus dem desoptierten Wasser 42 Trinkwasser herzustellen, muss gegebenfalls noch ein Filter- und Desinfektionsprozess bzw. ein Mineralisierungsprozess nachgelagert werden. Diese Prozesse entsprechen dem Stand der Technik. Es wird darauf hingewiesen, dass die in der vorliegenden Erfindung vorgeschlagenen konzentrierten Absorptionsmittel beziehungsweise Salzlösungen bereits eine starke desinfizierende Wirkung haben. Die Mineralisierung des aus der Luft gewonnenen Wassers könnte einfachheitshalber dadurch geschehen, dass das Wasser durch ein Kiesbett geführt wird.

Im Folgenden werden weitere, nicht in der Figur gezeigte Ausführungsbeispiele der Vorrichtung 10 zur Gewinnung von Wasser aus der Umgebungsluft 14 beschrieben.

Dabei kann beispielsweise das erwärmte, verdünnte Absorptionsmittel 36 innerhalb oder außerhalb der Desorptionsvorrichtung 30 mehrfach erneut erwärmt werden dadurch, dass es nachdem es über/durch die Verdampfungsstruktur 32 geflossen ist, erneut durch einen oder mehrere Wärmetauscher geführt wird. Der/die Wärmetauscher kann/können sich innerhalb oder außerhalb des Gehäuses 46 der Desorptionsvorrichtung 30 angeordnet sein. Auch kann/können innerhalb des Gehäuses 46 ein/mehrere Elemente zur Erwärmung des Absorptionsmittels 36 angebracht werden, die beispielsweise von der Wärmeträgerflüssigkeit der Solarmodule 26 durchflossen werden. Der Verdampfungsprozess kann somit stark unterstützt werden. In einer weiteren beispielhaften Ausführungsform können die Elemente zur Erwärmung des Absorptionsmittels 36 großflächig ausgelegt sein, so dass das Absorptionsmittel 36, welches über diese Elemente fließt unmittelbar an deren Oberfläche verdampft.

Des Weiteren besteht die Möglichkeit, dass innerhalb des Gehäuses 46 der Desorptionsvorrichtung 30 ein reduzierter Druck herrscht, dadurch, dass die Luft ganz oder zum Teil entfernt wird. Dies kann beispielsweise mittels einer Vakuumpumpe erreicht werden oder auch dadurch, dass Wasser innerhalb des Gehäuses 46 durch Erwärmung durch ein zusätzliches Heizelement zum Kochen gebracht wird und der Wasserdampf das Gehäuse 46 über ein Ventil verlassen kann. Dabei wird die im Gehäuse 46 enthaltene Luft vom Wasserdampf durch das Ventil mitgeführt und aus dem Gehäuse 46 entfernt. Wenn das Heizelement daraufhin abgeschaltet wird, kühlt das Wasser im Gehäuse 46 wieder ab und es herrscht anschließend innerhalb des Gehäuses 46 nur noch der Dampfdruck des Wasserdampfes. Durch den reduzierten Druck kann nun der Transport von Wasserdampf von der Verdampfungsstruktur 32 zu der Kondensationsstruktur 34 stark beschleunigt werden. Wenn das Gas innerhalb des Gehäuses 46 (fast) keine Luft sondern nur noch Wasserdampf enthält, ist keine Diffusion oder Konvektion mehr notwendig sondern der Wasserdampf kann direkt von der Verdampfungsstruktur 32 zu der Kondensationsstruktur 34 strömen.

Es sei an dieser Stelle klargestellt, dass der Begriff "Wasserdampf" den gasförmigen Aggregatszustand von Wasser beschreibt und nicht ein Gemisch von Luft und Wassertröpfchen.

## Patentansprüche

1. Verfahren zur Gewinnung von Wasser aus einer Umgebungsluft (14), wobei das Verfahren zumindest folgende Verfahrensschritte umfasst:
- Inkontaktbringen der Umgebungsluft (14) mit mindestens einem flüssigen Absorptionsmittel (16) zur Absorption von zumindest einem Teil des in der Umgebungsluft (14) enthaltenen Wassers;
- Fördern eines durch das absorbierte Wasser verdünnten Absorptionsmittels (18) zu einem ersten Wärmetauscher (20);
- Erwärmen des verdünnten Absorptionsmittels (18) mittels des ersten Wärmetauschers (20);
- Überführen des erwärmten und verdünnten Absorptionsmittels (36) in mindestens eine Desorptionsvorrichtung (30), wobei in der Desorptionsvorrichtung (30) mindestens eine Verdampfungsstruktur (32) und mindestens eine mit Wasser getränkte Kondensationsstruktur (34) angeordnet ist und wobei das erwärmte und verdünnte Absorptionsmittel (36) in der Desorptionsvorrichtung (30) der Verdampfungsstruktur (32) zugeführt wird und an und/oder in der Verdampfungsstruktur (32) eine Verdampfung von zumindest einem Teil des in dem erwärmten, verdünnten Absorptionsmittel (36) enthaltenen Wassers erfolgt und dass das mittels der Verdampfungsstruktur (32) verdampfte Wasser der Kondensationsstruktur (34) zur Kondensation des Wasserdampfs und zur Gewinnung von desorptierten Wasser (42) zugeführt wird,
wobei in der Desorptionsvorrichtung (30) desorptiertes Wasser (42) zu dem ersten Wärmetauscher (20) gefördert wird und mittels des ersten Wärmetauschers (20) eine Kühlung des desorptierten Wassers (42) mittels des verdünnten Absorptionsmittels (18) erfolgt.

2. Verfahren nach Anspruch 1,
**dadurch gekennzeichnet,**
**dass** das Inkontaktbringen der Umgebungsluft (14) mit dem flüssigen Absorptionsmittel (16) durch ein Versprühen des Absorptionsmittels (16) in der Umgebungsluft (14) oder mittels eines Hindurchleitens der Umgebungsluft (14) durch eine mit dem Absorptionsmittel (16) getränkte erste Absorptionsstruktur (12) erfolgt.

3. Verfahren nach Anspruch 1 oder 2,
**dadurch gekennzeichnet,**
**dass** ein zusätzliches Erwärmen des erwärmten und verdünnten Absorptionsmittels (36) mittels mindestens einer Erwärmungsvorrichtung erfolgt, wobei die Erwärmungsvorrichtung(en) vor und/oder nach und/oder außerhalb und/oder innerhalb der Desorptionsvorrichtung (30) angeordnet ist/sind.

4. Verfahren nach Anspruch 3,
**dadurch gekennzeichnet,**
**dass** die Erwärmungsvorrichtung mindestens einen zwischen dem ersten Wärmetauscher (20) und der Desorptionsvorrichtung (30) angeordneten zweiten Wärmetauscher (22) umfasst;
oder
**dass** die Erwärmungsvorrichtung mindestens einen zwischen dem ersten Wärmetauscher (20) und der Desorptionsvorrichtung (30) angeordneten zweiten Wärmetauscher (22) umfasst und der zweite Wärmetauscher (22) in Wirkverbindung mit mindestens einer Heizvorrichtung, insbesondere mindestens einem Solarmodul (26) und/oder mindestens einem Schlauchsystem (28) mit einer Wärmeträgerflüssigkeit, in Wirkverbindung steht.

5. Verfahren nach Anspruch 1,
**dadurch gekennzeichnet,**
**dass** die Zuführung des verdampften Wassers zu der Kondensationsstruktur (34) mittels einer natürlichen und/oder technisch erzeugten Luftströmung (40) erfolgt; oder dass die Zuführung des verdampften Wassers zu der Kondensationsstruktur (34) mittels natürlicher Diffusion erfolgt.

6. Verfahren nach einem der Ansprüche 1 oder 5,
**dadurch gekennzeichnet,**
**dass** innerhalb der Desorptionsvorrichtung (30) ein Unterdruck zur Unterstützung der Zuführung des verdampften Wassers zu der Kondensationsstruktur (34) angelegt wird.

7. Verfahren nach einem der Ansprüche 1, 5 oder 6,
**dadurch gekennzeichnet,**
**dass** die Kondensationsstruktur (34) zumindest teilweise mit durch den ersten Wärmetauscher (20) gekühltes, desorptiertes Wasser (44) getränkt wird.

8. Verfahren nach einem der Ansprüche 2 bis 7,
**dadurch gekennzeichnet,**
**dass** an der Verdampfungsstruktur (32) eine Konzentration des verdünnten Absorptionsmittels (36) unter Erhalt eines konzentrierten Absorptionsmittels (38) erfolgt, wobei das konzentrierte Absorptionsmittel (38) der ersten Absorptionsstruktur (12) mit oder ohne Zwischenschaltung eines dritten Wärmetauschers (24) zugeführt wird;
oder
**dass** an der Verdampfungsstruktur (32) eine Konzentration des verdünnten Absorptionsmittels (36) unter Erhalt eines konzentrierten Absorptionsmittels (38) erfolgt, wobei das konzentrierte Absorptionsmittel (38) der ersten Absorptionsstruktur (12) mit Zwischenschaltung eines dritten Wärmetauschers (24) zugeführt wird und der dritte Wärmetauscher (24) in Fließrichtung des verdünnten Absorptionsmittels (18) beziehungsweise des erwärmten und verdünnten Absorptionsmittels (36) nach dem ersten Wärmetauscher (20) angeordnet ist, wobei durch den dritten Wärmetauscher (24) eine Erwärmung des verdünnten Absorptionsmittels (36) vor Eintritt in die Desorptionsvorrichtung (30) erfolgt.

9. Vorrichtung zur Gewinnung von Wasser aus einer Umgebungsluft (14) umfassend
- mindestens eine Vorrichtung zum Aufbringen und/oder Leiten eines flüssigen Absorptionsmittels (16) auf und/oder zu einer ersten Absorptionsstruktur (12), wobei die erste Absorptionsstruktur (12) zur Absorption von zumindest einem Teil des in der Umgebungsluft (14) enthaltenen Wassers ausgebildet ist;
- mindestens eine Fördervorrichtung (48) zum Fördern eines durch das absorbierte Wasser verdünnten Absorptionsmittels (18) zu einem ersten Wärmetauscher (20), wobei durch den ersten Wärmetauscher (20) ein Erwärmen des verdünnten Absorptionsmittels (18) erfolgt; und
- mindestens eine Desorptionsvorrichtung (30), wobei in der Desorptionsvorrichtung (30) mindestens eine Verdampfungsstruktur (32) und mindestens eine Kondensationsstruktur (34) angeordnet ist, und wobei das erwärmte und verdünnte Absorptionsmittel (36) in der Desorptionsvorrichtung (30) der Verdampfungsstruktur (32) zugeführt wird und an und/oder in der Verdampfungsstruktur (32) eine Verdampfung von zumindest einem Teil des in dem erwärmten, verdünnten Absorptionsmittel (36) enthaltenen Wassers erfolgt und dass das mittels der Verdampfungsstruktur (32) verdampfte Wasser der Kondensationsstruktur (34) zur Kondensation des Wasserdampfs und zur Gewinnung von desorptierten Wasser (42) zugeführt wird,
wobei der erste Wärmetauscher (20) mit der Desorptionsvorrichtung (30) flüssigkeitsleitend verbunden ist, derart, dass in der Desorptionsvorrichtung (30) desorptiertes Wasser (42) mittels des verdünnten Absorptionsmittels (18) gekühlt wird,
- mindestens ein Leitungssystem (50), wobei das Leitungssystem (50) derart ausgebildet ist, dass die Kondensationsstruktur (34) zumindest teilweise mit durch den ersten Wärmetauscher (20) gekühlten, desorptierten Wasser (44) getränkt wird.

10. Vorrichtung nach Anspruch 9,
**dadurch gekennzeichnet,**
**dass** die Vorrichtung (10) mindestens eine zusätzliche Erwärmungsvorrichtung für ein weiteres Erwärmen des erwärmten, verdünnten Absorptionsmittels (36) umfasst, wobei die Erwärmungsvorrichtung(en) vor und/oder nach und/oder außerhalb und/oder innerhalb der Desorptionsvorrichtung (30) angeordnet ist/sind.

11. Vorrichtung nach Anspruch 10,
**dadurch gekennzeichnet,**
**dass** die Erwärmungsvorrichtung mindestens einen zwischen dem ersten Wärmetauscher (20) und der Desorptionsvorrichtung (30) angeordneten zweiten Wärmetauscher (22) umfasst, wobei der zweite Wärmetauscher (22) einerseits flüssigkeitsleitend mit dem ersten Wärmetauscher (22) und andererseits flüssigkeitsleitend mit der Desorptionsvorrichtung (30) verbunden ist.

12. Vorrichtung nach Anspruch 11,
**dadurch gekennzeichnet,**
**dass** der zweite Wärmetauscher (22) in Wirkverbindung mit mindestens einer Heizvorrichtung ist,
oder
**dass** der zweite Wärmetauscher (22) in Wirkverbindung mit mindestens einer Heizvorrichtung ist und die Heizvorrichtung mindestens ein Solarmodul (26) und/oder mindestens ein Schlauchsystem (28) mit einer Wärmeträgerflüssigkeit umfasst.

13. Vorrichtung nach Anspruch 11,
**dadurch gekennzeichnet,**
**dass** die Erwärmungsvorrichtung(en) Wärmetauscher, Solarmodule und/oder Leitungssysteme für Wärmeträgerflüssigkeiten umfassen.

14. Vorrichtung nach Anspruch 9,
**dadurch gekennzeichnet,**
**dass** die Desorptionsvorrichtung (30) Mittel zum Transport des mittels der Verdampfungsstruktur (32) verdampften Wassers zu der Kondensationsstruktur (34) umfasst und/oder dass die Vorrichtung (10) Mittel zum Erzeugen eines Unterdrucks in der Desorptionsvorrichtung (30) umfasst.

15. Vorrichtung nach einem der Ansprüche 9 bis 14,
**dadurch gekennzeichnet,**
**dass** die Vorrichtung (10) mindestens ein Leitungssystem (52) umfasst, wobei das Leitungssystem (52) derart ausgebildet ist, dass aus der Desorptionsvorrichtung (30) abfließendes konzentriertes Absorptionsmittel (38) der ersten Absorptionsstruktur (12) mit oder ohne Zwischenschaltung eines dritten Wärmetauschers (24) zugeführt wird;
oder
**dass** die Vorrichtung (10) mindestens ein Leitungssystem (52) umfasst, wobei das Leitungssystem (52) derart ausgebildet ist, dass aus der Desorptionsvorrichtung (30) abfließendes konzentriertes Absorptionsmittel (38) der ersten Absorptionsstruktur (12) mit oder ohne Zwischenschaltung eines dritten Wärmetauschers (24) zugeführt wird und der dritte Wärmetauscher (24) in Fließrichtung des verdünnten Absorptionsmittels (18) beziehungsweise erwärmten und verdünnten Absorptionsmittels (36) nach dem ersten Wärmetauscher (20) angeordnet ist, wobei durch den dritten Wärmetauscher (24) eine Erwärmung des verdünnten Absorptionsmittels (36) vor Eintritt in die Desorptionsvorrichtung (30) erfolgt.

## Claims

1. A method for obtaining water from ambient air (14), wherein the method includes at least the following method steps:
- contacting the ambient air (14) with at least one liquid absorbent (16) for absorbing at least a part of the water contained in the ambient air (14);
- delivering an absorbent (18) diluted by the absorbed water to a first heat exchanger (20);
- heating the diluted absorbent (18) by means of the first heat exchanger (20);
- transferring the heated and diluted absorbent (36) into at least one desorption device (30), wherein at least one evaporation structure (32) and at least one condensation structure (34) soaked with water are arranged in the desorption device (30) and wherein the heated and diluted absorbent (36) is supplied to the evaporation structure (32) in the desorption device (30), and an evaporation of at least a part of the water contained in the heated, diluted absorbent (36) is effected at and/or in the evaporation structure (32), and that the water evaporated by means of the evaporation structure (32) is supplied to the condensation structure (34) for condensation of the water vapor and for obtaining desorbed water (42),
wherein water (42) desorbed in the desorption device (30) is delivered to the first heat exchanger (20) and cooling of the desorbed water (42) is effected by means of the diluted absorbent (18) by means of the first heat exchanger (20).

2. The method according to claim 1,
**characterized in that**
contacting the ambient air (14) with the liquid absorbent (16) is effected by spraying the absorbent (16) in the ambient air (14) or by means of passing the ambient air (14) through a first absorption structure (12) soaked with the absorbent (16).

3. The method according to claim 1 or 2,
**characterized in that**
additionally heating the heated and diluted absorbent (36) is effected by means of at least one heating device, wherein the heating devices(s) is/are arranged before and/or after and/or outside of and/or within the desorption device (30).

4. The method according to claim 3,
**characterized in that**
the heating device includes at least one second heat exchanger (22) arranged between the first heat exchanger (20) and the desorption device (30);
or
that the heating device includes at least one second heat exchanger (22) arranged between the first heat exchanger (20) and the desorption device (30) and the second heat exchanger (22) is in operative connection with at least one heating device, in particular at least one solar module (26) and/or at least one hose system (28) with a heat transfer liquid.

5. The method according to claim 1,
**characterized in that**
the supply of the evaporated water to the condensation structure (34) is effected by means of a natural and/or technically generated airflow (40); or that the supply of the evaporated water to the condensation structure (34) is effected by means of natural diffusion.

6. The method according to any one of claims 1 to 5,
**characterized in that**
a negative pressure is applied within the desorption device (30) for assisting the supply of the evaporated water to the condensation structure (34).

7. The method according to any one of claims 1, 5 or 6,
**characterized in that**
the condensation structure (34) is at least partially soaked with desorbed water (44) cooled by the first heat exchanger (20).

8. The method according to any one of claims 2 to 7,
**characterized in that**
a concentration of the diluted absorbent (36) is effected at the evaporator structure (32) while obtaining a concentrated absorbent (38), wherein the concentrated absorbent (38) is supplied to the first absorption structure (12) with or without interposition of a third heat exchanger (24);
or
that a concentration of the diluted absorbent (36) is effected at the evaporator structure (32) while obtaining a concentrated absorbent (38), wherein the concentrated absorbent (38) is supplied to the first absorption structure (12) with interposition of a third heat exchanger (24) and the third heat exchanger (24) is arranged after the first heat exchanger (20) in flow direction of the diluted absorbent (18) or of the heated and diluted absorbent (36), wherein heating of the diluted absorbent (36) before entering the desorption device (30) is effected by the third heat exchanger (24).

9. A device for obtaining water from ambient air (14), including
- at least one device for applying and/or passing a liquid absorbent (16) onto and/or to a first absorption structure (12), wherein the first absorption structure (12) is formed for absorbing at least a part of the water contained in the ambient air (14);
- at least one delivering device (48) for delivering an absorbent (18) diluted by the absorbed water to a first heat exchanger (20), wherein heating of the diluted absorbent (18) is effected by the first heat exchanger (20); and
- at least one desorption device (30), wherein at least one evaporation structure (32) and at least one condensation structure (34) are arranged in the desorption device (30), and wherein the heated and diluted absorbent (36) is supplied to the evaporation structure (32) in the desorption device (30), and evaporation of at least a part of the water contained in the heated, diluted absorbent (36) is effected at and/or in the evaporation structure (32), and that the water evaporated by means of the evaporation structure (32) is supplied to the condensation structure (34) for condensation of the water vapor and for obtaining desorbed water (42),
wherein the first heat exchanger (20) is connected to the desorption device (30) in liquid conducting manner such that water (42) desorbed in the desorption device (30) is cooled by means of the diluted absorbent (18),
- at least one line system (50), wherein the line system (50) is formed such that the condensation structure (34) is at least partially soaked with desorbed water (44) cooled by the first heat exchanger (20).

10. The device according to claim 9,
**characterized in that**
the device (10) includes at least one additional heating device for further heating the heated, diluted absorbent (36), wherein the heating device(s) is/are arranged before and/or after and/or outside of and/or within the desorption device (30).

11. The device according to claim 10,
**characterized in that**
the heating device includes at least one second heat exchanger (22) arranged between the first heat exchanger (20) and the desorption device (30), wherein the second heat exchanger (22) is connected to the first heat exchanger (22) in liquid conducting manner on the one hand and to the desorption device (30) in liquid conducting manner on the other hand.

12. The device according to claim 11,
**characterized in that**
the second heat exchanger (22) is in operative connection with at least one heating device,
or
that the second heat exchanger (22) is in operative connection with at least one heating device and the heating device includes at least one solar module (26) and/or at least one hose system (28) with a heat transfer liquid.

13. The device according to claim 11,
**characterized in that**
the heating device(s) include(s) heat exchangers, solar modules and/or line systems for heat transfer liquids.

14. The device according to claim 9,
**characterized in that**
the desorption device (30) includes means for transporting the water evaporated by means of the evaporation structure (32) to the condensation structure (34) and/or that the device (10) includes means for generating a negative pressure in the desorption device (30).

15. The device according to any one of claims 9 to 14,
**characterized in that**
the device (10) includes at least one line system (52), wherein the line system (52) is formed such that concentrated absorbent (38) outflowing from the desorption device (30) is supplied to the first absorption structure (12) with or without interposition of a third heat exchanger (24);
or
that the device (10) includes at least one line system (52), wherein the line system (52) is formed such that concentrated absorbent (38) outflowing from the desorption device (30) is supplied to the first absorption structure (12) with or without interposition of a third heat exchanger (24), and the third heat exchanger (24) is arranged after the first heat exchanger (20) in flow direction of the diluted absorbent (18) or of the heated and diluted absorbent (36), wherein heating of the diluted absorbent (36) before entering the desorption device (30) is effected by the third heat exchanger (24).

## Revendications

1. Procédé pour obtenir de l'eau à partir de l'air ambiant (14), dans lequel le procédé comporte au moins les étapes suivantes :
- la mise en contact de l'air ambiant (14) avec au moins un agent d'absorption liquide (16) pour l'absorption d'au moins une partie de l'eau contenue dans l'air ambiant (14) ;
- le transport d'un agent d'absorption (18) dilué par l'eau absorbée vers un premier échangeur de chaleur (20) ;
- le chauffage de l'agent d'absorption dilué (18) par l'intermédiaire du premier échangeur de chaleur (20) ;
- le transfert de l'agent d'absorption chauffé et dilué (36) dans au moins un dispositif de désorption (30), dans lequel, dans le dispositif de désorption (30), au moins une structure d'évaporation (32) et au moins une structure de condensation (34) imprégnée de l'eau est agencée, et dans lequel l'agent d'absorption chauffé et dilué (36) dans le dispositif de désorption (30) est alimenté à la structure d'évaporation (32), et à et / ou dans la structure d'évaporation (32) une évaporation d'au moins une partie de l'eau contenue dans l'agent d'absorption chauffé et dilué (36) est effectuée, et que l'eau de la structure de condensation (34), évaporée par l'intermédiaire de la structure d'évaporation (32), est alimentée pour la condensation de la vapeur d'eau et pour obtenir de l'eau désorbée (42),
dans lequel, dans le dispositif de désorption (30), de l'eau désorbée (42) est transportée vers le premier échangeur de chaleur (20), et un refroidissement de l'eau désorbée (42) est réalisé au moyen de l'agent d'absorption dilué (18) par l'intermédiaire du premier échangeur de chaleur (20).

2. Procédé selon la revendication 1,
**caractérisé en ce**
**que** la mise en contact de l'air ambiant (14) avec l'agent d'absorption liquide (16) est effectuée par une atomisation de l'agent d'absorption (16) dans l'air ambiant (14) ou par l'intermédiaire d'un passage de l'air ambiant (14) à travers une structure d'absorption (12) imprégnée avec l'agent d'absorption (16).

3. Procédé selon la revendication 1 ou 2,
**caractérisé en ce**
**qu'**un chauffage supplémentaire de l'agent d'absorption chauffé et dilué (36) est effectué par l'intermédiaire d'au moins un dispositif de chauffage, dans lequel le(s) dispositif(s) de chauffage est (sont) agencé(s) en amont et / ou en aval et / ou à l'extérieur et / ou à l'intérieur du dispositif de désorption (30).

4. Procédé selon la revendication 3,
**caractérisé en ce**
**que** le dispositif de chauffage comporte au moins un second échangeur de chaleur (22) agencé entre le premier échangeur de chaleur (20) et le dispositif de désorption (30) ;
ou
**que** le dispositif de chauffage comporte au moins un second échangeur de chaleur (22) agencé entre le premier échangeur de chaleur (20) et le dispositif de désorption (30), et le second échangeur de chaleur (22) est lié de manière opérationnelle à au moins un dispositif chauffant, surtout au moins un module solaire (26) et / ou au moins un système de tuyauterie (28) avec un fluide caloporteur.

5. Procédé selon la revendication 1,
**caractérisé en ce**
**que** l'alimentation de l'eau évaporée vers la structure de condensation (34) est effectuée par l'intermédiaire d'un flux d'air naturel et / ou techniquement généré (40) ; ou
**que** l'alimentation de l'eau évaporée vers la structure de condensation (34) est effectuée par l'intermédiaire de la diffusion naturelle.

6. Procédé selon l'une quelconque des revendications 1 ou 5,
**caractérisé en ce**
**qu'**à l'intérieur du dispositif de désorption (30) une dépression est appliquée pour soutenir l'alimentation de l'eau évaporée vers la structure de condensation (34).

7. Procédé selon l'une quelconque des revendications 1, 5 ou 6,
**caractérisé en ce**
**que** la structure de condensation (34) est imprégnée au moins partiellement avec de l'eau (44) désorbée et refroidie par le premier échangeur de chaleur (20).

8. Procédé selon l'une quelconque des revendications 2 à 7,
**caractérisé en ce**
**qu'**à la structure d'évaporation (32) une concentration de l'agent d'absorption dilué (36) est réalisée en maintenant un agent d'absorption concentré (38), dans lequel l'agent d'absorption concentré (38) de la première structure d'absorption (12) est alimenté avec ou sans interposition d'un troisième échangeur de chaleur (24) ;
ou
**qu'**à la structure d'évaporation (32) une concentration de l'agent d'absorption dilué (36) est réalisée en maintenant un agent d'absorption concentré (38), dans lequel l'agent d'absorption concentré (38) de la première structure d'absorption (12) est alimenté avec interposition d'un troisième échangeur de chaleur (24), et le troisième échangeur de chaleur (24) est agencé dans la direction d'écoulement de l'agent d'absorption dilué (36) et / ou de l'agent d'absorption chauffé et dilué (36) en aval du premier échangeur de chaleur (20), dans lequel, par le troisième échangeur de chaleur (24), un chauffage de l'agent d'absorption dilué (36) est effectué avant l'entrée dans le dispositif de désorption (30).

9. Dispositif pour obtenir de l'eau à partir de l'air ambiant (14) comportant
- au moins un dispositif pour l'application et / ou la conduite d'un agent d'absorption liquide (16) à et / ou vers une première structure d'absorption (12), dans lequel la première structure d'absorption (12) est conçue pour l'absorption d'au moins une partie de l'eau contenue dans l'air ambiant (14) ;
- au moins un dispositif de transport (48) pour le transport d'un agent d'absorption dilué (18) par l'eau absorbée vers un premier échangeur de chaleur (20), dans lequel un chauffage de l'agent d'absorption dilué (18) est réalisé par le premier échangeur de chaleur (20) ; et
- au moins un dispositif de désorption (30), dans lequel, dans le dispositif de désorption (30), au moins une structure d'évaporation (32) et au moins une structure de condensation (34) est agencée, et dans lequel l'agent d'absorption chauffé et dilué (36) dans le dispositif de désorption (30) est alimenté à la structure d'évaporation (32) et à et / ou dans la structure d'évaporation (32) une évaporation d'au moins une partie de l'eau contenue dans l'agent d'absorption chauffé et dilué (36) est effectuée, et que l'eau de la structure de condensation (34), évaporée par l'intermédiaire de la structure d'évaporation (32), est alimentée pour la condensation de la vapeur d'eau et pour obtenir de l'eau désorbée (42),
dans lequel le premier échangeur de chaleur (20) est en communication fluidique avec le dispositif de désorption (30) de sorte que, dans le dispositif de désorption (30), de l'eau désorbée (42) est refroidie par l'intermédiaire de l'agent d'absorption dilué (18),
- au moins un système de conduite (50), dans lequel le système de conduite (50) est conçu de telle manière que la structure de condensation (34) soit imprégnée au moins partiellement avec de l'eau désorbée (44) et refroidie par le premier échangeur de chaleur (20).

10. Dispositif selon la revendication 9,
**caractérisé en ce**
**que** le dispositif (10) comporte au moins un dispositif de chauffage supplémentaire pour un chauffage supplémentaire de l'agent d'absorption chauffé et dilué (36), dans lequel le(s) dispositif(s) de chauffage est (sont) agencé(s) en amont et / ou en aval et / ou à l'extérieur et / ou à l'intérieur du dispositif de désorption (30).

11. Dispositif selon la revendication 10,
**caractérisé en ce**
**que** le dispositif de chauffage comporte au moins un second échangeur de chaleur (22) agencé entre le premier échangeur de chaleur (20) et le dispositif de désorption (30), dans lequel le second échangeur de chaleur (22) d'une part est en communication fluidique avec le premier échangeur de chaleur (20) et d'autre part est en communication fluidique avec le dispositif de désorption (30).

12. Dispositif selon la revendication 11,
**caractérisé en ce**
**que** le second échangeur de chaleur (22) est lié de manière opérationnelle à au moins un dispositif chauffant,
ou
**que** le second échangeur de chaleur (22) est lié de manière opérationnelle à au moins un dispositif chauffant, et que le dispositif chauffant comporte au moins un module solaire (26) et / ou au moins un système de tuyauterie (28) avec un fluide caloporteur.

13. Dispositif selon la revendication 11,
**caractérisé en ce**
**que** le(s) dispositif(s) de chauffage comportent des échangeurs de chaleur, des modules solaires et / ou des système de conduite pour des fluides caloporteurs.

14. Dispositif selon la revendication 9,
**caractérisé en ce**
**que** le dispositif de désorption (30) comporte des moyens pour le transport de l'eau évaporée par l'intermédiaire de la structure d'évaporation vers la structure de condensation (34) et / ou que le dispositif (10) comporte des moyens pour générer une dépression dans le dispositif de désorption (30).

15. Dispositif selon l'une quelconque des revendications 9 à 14, **caractérisé en ce**
**que** le dispositif (10) comporte au moins un système de conduite (52), dans lequel le système de conduite (52) est conçu de telle manière que l'agent d'absorption concentré (38) de la première structure d'absorption (12) s'écoulant à partir du dispositif de désorption (30) soit alimenté avec ou sans interposition d'un troisième échangeur de chaleur (24) ;
ou
**que** le dispositif (10) comporte au moins un système de conduite (52), dans lequel le système de conduite (52) est conçu de telle manière que l'agent d'absorption concentré (38) de la première structure d'absorption (12) s'écoulant à partir du dispositif de désorption (30) soit alimenté avec ou sans interposition d'un troisième échangeur de chaleur (24), et le troisième échangeur de chaleur (24) soit agencé dans la direction d'écoulement de l'agent d'absorption dilué (18) et / ou de l'agent d'absorption chauffé et dilué (36) en aval du premier échangeur de chaleur (20), dans lequel, par le troisième échangeur de chaleur (24), un chauffage de l'agent d'absorption dilué (36) est effectué avant l'entrée dans le dispositif de désorption (30).
